# EUROPÄISCHE PATENTANMELDUNG

(11) **EP 0 957 250 A2**
(43) Veröffentlichungstag der Anmeldung: **17.11.1999**
(21) Anmeldenummer: 98124890.9
(22) Anmeldetag: 29.12.1998
(51) Int. Cl.: F02B 75/36

(54) **Verbrennungsmotor**

(30) Priorität: 14.05.1998 AT 83398
(71) Anmelder: HMS Artist Scheier OEG, 6800 Feldkirch (AT)
(72) Erfinder: Nagel, Edmund Ferdinand, Reichsstrasse 82, 6800 Feldkirch (AT)

(57) **Zusammenfassung**

Ein Verbrennungsmotor mit einer Brennkammer (1, 201), die eine Zündeinrichtung aufweist, zum Verbrennen eines Kraftstoffes unter Bildung eines Verbrennungsgases in einem Explosionstakt weist eine vom expandierenden Verbrennungsgas verschiebbare starre Wandung, deren Bewegung auf eine Antriebswelle (9, 267) übertragbar ist. Die Brennkammer (1, 201) besitzt ein konstantes Volumen, und zur Umsetzung der Energie des Verbrennungsgases in mechanische Energie ist eine von der Brennkammer (1, 201) gesonderte, mit der Brennkammer (1, 201) in Verbindung stehende Pumpkammer (12, 212) vorgesehen, welche die verschiebbare starre Wandung aufweist, wobei vorzugsweise die Pumpkammer (12, 212) von einem Zylinder gebildet wird, in dem ein Kolben (11, 211) verschiebbar gelagert ist, der die verschiebbare starre Wandung bildet.

## Beschreibung

Die Erfindung betrifft einen Verbrennungsmotor mit einer Brennkammer, die eine Zündeinrichtung aufweist, zum Verbrennen eines Kraftstoffes unter Bildung eines Verbrennungsgases in einem Explosionstakt, wobei der Verbrennungsmotor eine vom expandierenden Verbrennungsgas verschiebbare starre Wandung aufweist, deren Bewegung auf eine Antriebswelle übertragbar ist.

Herkömmliche derartige Verbrennungsmotoren sind beispielsweise Ottomotoren und Dieselmotoren oder Stirlingmotoren. Bei Dieselmotoren und Ottomotoren wird die Brennkammer von einem Zylinder gebildet, in dem ein Kolben verschiebbar gelagert ist, der die verschiebbare starre Wandung bildet, die mit einer Antriebswelle in Verbindung steht.

Aus der DE-OS 32 14 516 ist es weiters bekannt, daß das in einer Brennkammer, welche wiederum von einem Zylinder mit darin gelagertem Kolben gebildet wird, erzeugte Verbrennungsgas nach einer ersten Expansion und Umsetzung in mechanische Arbeit zur weiteren Expansion unter weiterer Umsetzung in mechanische Arbeit in einen zweiten Zylinder mit darin gelagertem Kolben geleitet wird.

Aufgabe der Erfindung ist die Erhöhung des Wirkungsgrades eines Verbrennungsmotors der eingangs genannten Art und erfindungsgemäß gelingt dies dadurch, daß die Brennkammer ein konstantes Volumen aufweist und zur Umsetzung der Energie des Verbrennungsgases in mechanische Energie eine von der Brennkammer gesonderte, mit der Brennkammer in Verbindung stehende Pumpkammer vorgesehen ist, welche die verschiebbare starre Wandung aufweist, wobei vorzugsweise die Pumpkammer von einem Zylinder gebildet wird, in dem ein Kolben verschiebbar gelagert ist, der die verschiebbare starre Wandung bildet.

Bei herkömmlichen Verbrennungsmotoren der eingangs genannten Art, bei denen die verschiebbare Wandung direkt in der Brennkammer angeordnet ist, steht das am Ende des Explosionstaktes aus der Brennkammer abgeleitete Verbrennungsgas noch unter einem relativ hohen Überdruck. Dadurch, daß beim erfindungsgemäßen Verbrennungsmotor die Verbrennung und die Umsetzung in mechanische Arbeit in verschiedenen Kammern erfolgen, kann die dem expandierenden Verbrennungsgas innewohnende Energie zu einem größeren Teil ausgenutzt werden. Vorteilhafterweise kann dabei die Pumpkammer (in Abhängigkeit u.a. vom verwendeten Kraftstoff) so ausgelegt werden, daß am Ende des Explosionstaktes, wenn die Endstellung der verschiebbaren Wandung erreicht ist, das Verbrennungsgas bis auf etwa Atmosphärendruck entspannt ist.

Weiters kann die Befüllung und der Brennungsprozeß in der Brennkammer optimiert werden, da in der Brennkammer selbst keine Umsetzung der Energie des Verbrennungsgases in mechanische Antriebsenergie des Motors erfolgt und die Brennkammer daher, beispielsweise in ihrer Formgebung und in der Anordnung des Zündelementes, optimal an den Verbrennungsprozeß angepaßt werden kann.

Aus der WO 98/01338 ist ein pulsierender Rückstoßantrieb für Wasserfahrzeuge bekannt, bei dem das in einer Brennkammer gebildete Verbrennungsgas in eine mit Wasser gefüllte Pumpkammer geleitet wird, aus der es das Wasser unter Erzeugung eines Rückstoßes austreibt. Die Pumpkammer dieses Verbrennungsmotors weist aber keine starre verschiebbare Wandung auf, sondern bildet ein hydraulisches Element. Die Verwendung von separaten Brenn- und Pumpkammern ergibt sich hier aus der Unmöglichkeit einer direkten Befüllung der Brennkammer mit Wasser.

Vorzugsweise ist beim erfindungsgemäßen Verbrennungsmotor ein an den Explosionstakt anschließender Implosionstakt vorgesehen, in welchem auch noch die thermische Energie des expandierten heißen Verbrennungsgases zumindest teilweise ausgenützt werden soll. Dazu wird in die Pumpkammer ein Kühlmedium eingesprüht, wodurch sich das Volumen des Verbrennungsgases schlagartig verringert und ein Unterdruck entsteht, der auf die verschiebbare starre Wandung der Pumpkammer wirkt.

Beim erfindungsgemäßen Verbrennungsmotor münden die Zuführleitungen bzw. - öffnungen für Frischluft und Kraftstoff oder für das Gemisch vorteilhafterweise ausschließlich in die Brennkammer, d.h. zur Pumpkammer führen keine derartigen Zuführleitungen. Die Pumpenkammer weist vorteilhafterweise als Gaszuström- oder Gasabströmöffnungen nur ein Abgasauslaßventil und eine Überströmöffnung von der Brennkammer auf.

Um einen möglichst hohen Wirkungsgrad zu erreichen und die entstehenden Schadstoffe zu minimieren, wird die Brennkammer vorteilhafterweise mit im wesentlichen gleichbleibenden Ladungen an brennbarem Gemisch befüllt. (d. h. es wird im Gegensatz zu herkömmlichen Diesel- oder Ottomotoren vorteilhafterweise keine lastabhängige Befüllung der Brennkammer durchgeführt.) Die Zündung des Gemisches erfolgt bei einem Druck von ca. 0,5 bis 2 bar, vorzugsweise bei etwa Atmosphärendruck.

Soll der erfindungsgemäße Verbrennungsmotor beispielsweise als Antrieb für ein Kraftfahrzeug eingesetzt werden, ist in einem ersten Ausführungsbeispiel der Erfindung zur Steuerung der Drehzahl des Verbrennungsmotors vorgesehen, mit der Antriebswelle des Motors ein stufenloses, vorzugsweise hydrostatisches Getriebe zu verbinden, dessen Funktion in der Figurenbeschreibung genauer erläutert wird. In einem zweiten Ausführungsbeispiel der Erfindung wird die Leistung des Verbrennungsmotors dadurch eingestellt, daß zwischen Arbeitstakten, in denen Zündungen des Gemisches in der Brennkammer erfolgen, Leertakte ohne solche Zündungen eingeschaltet werden. In diesem Fall kann auch ein kraftschlüssiges mechanisches Ganggetriebe, vorzugsweise über eine Kupplung, mit der Antriebswelle verbunden sein.

Bei einem weiteren Ausführungsbeispiel wird vom Kolben der Pumpkammer - ohne Zwischenschaltung einer Kurbelwelle und rotierenden Antriebswelle - direkt eine Hydraulikpumpeinrichtung, welche mindestens eine Hydraulik-Kolben-Zylindereinheit aufweist, angetrieben. Diese Hydraulikpumpeinrichtung ist in ihrem Pumpvolumen und -druck verstellbar ausgebildet und es kann daher als von dieser Hydraulikpumpeinrichtung angetriebener Hydraulikmotor ein unverstellbarer Hydraulikmotor mit hohem Wirkungsgrad verwendet werden. Als ein solcher Konstant-Hydraulikmotor eignet sich insbesondere ein Schrägscheibenkolbenmotor, der in einem großen Drehzahlbereich einen Wirkungsgrad von η > 0,9 aufweist. Da auch Hydraulikpumpeinrichtungen auf Kolben-Zylinder-Basis einen sehr hohen Wirkungsgrad aufweisen, ergibt sich insgesamt ein ausgezeichneter Gesamtwirkungsgrad.

Von diesem Ausführungsbeispiel werden in der Figurenbeschreibung wiederum mehrere mögliche Varianten erläutert werden.

Weitere Vorteile und Einzelheiten der Erfindung werden im folgenden anhand der beiliegenden Zeichnung erläutert.

In dieser zeigen:
Fig. 1 eine schematische Darstellung eines erfindungsgemäßen Verbrennungsmotors zum Antrieb eines Kraftfahrzeuges,
Fig. 2 eine schematische Darstellung der Gemischaufbereitungseinrichtung und
Fig. 3 ein zweites Ausführungsbeispiel eines erfindungsgemäßen Verbrennungsmotors.
Fig. 4 ein drittes Ausführungsbeispiel eines erfindungsgemäßen Verbrennungsmotors,
Fig. 5 ein viertes Ausführungsbeispiel eines erfindungsgemäßen Verbrennungsmotors,
Fig. 6 ein fünftes Ausführungsbeispiel eines erfindungsgemäßen Verbrennungsmotors, und
Fig. 7 einen schematischen Schnitt durch ein selbssperrendes Rückschlagventil zur Verwendung im Hydraulikkreis des erfindungsgemäßen Verbrennungsmotors.

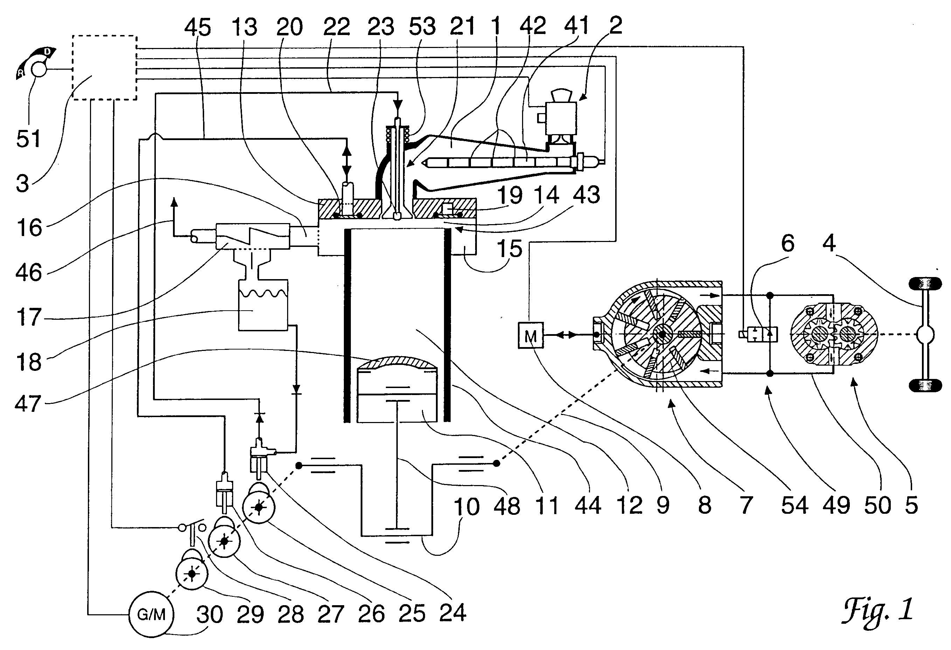

Der in Fig. 1 dargestellte erfindungsgemäße Verbrennungsmotor weist eine Brennkammer 1 auf, welche über eine Gemischaufbereitungseinrichtung 2 mit einem Kraftstoff-Luft-Gemisch befüllbar ist, das in der Brennkammer 1 unter atmosphärischem Druck steht. Das Kraftstoff-Luft-Gemisch wird über eine Zündstange 41, welche entlang ihrer Länge mehrere Zündpunkte 42 aufweist, gezündet. Eine derartige Zündstange ist in der WO 98/01338 beschrieben. Auch Kriterien zur geeigneten Ausbildung der Brennkammer sind in dieser Schrift enthalten. Das sich bildende expandierende Verbrennungsgas öffnet das als selbstschließendes Rückschlagventil ausgebildete Einlaßventil 21 und strömt in die als Zylinderraum ausgebildete Pumpkammer 12. Der eine verschiebbare starre Wandung der Pumpkammer 12 bildende Kolben 11 befindet sich zu diesem Zeitpunkt im Bereich seines oberen Totpunktes und wird durch das expandierende Verbrennungsgas nach unten gedrückt. Die Volumina von Brennkammer 1 und Pumpkammer 12 sind so bemessen, daß sich das Verbrennungsgas, wenn der Kolben 11 seinen unteren Totpunkt erreicht hat, gerade etwa auf Atmosphärendruck entspannt hat und dadurch seine Druckenergie maximal ausgenutzt wurde.

Im Anschluß an den beschriebenen Explosionstakt folgt ein Implosionstakt. Dazu wird eine Sprühdüse 23, welche im Rückschlagventilstößel des Einlaßventils 21 angeordnet ist, über eine Kühlflüssigkeitsleitung 22 mit Kühlflüssigkeit beaufschlagt und eine Kühlflüssigkeit in die Pumpkammer 12 eingesprüht. Das heiße Verbrennungsgas wird schlagartig abgekühlt und ein Unterdruck in der Pumpkammer 12 bildet sich aus. Dieser Unterdruck bewirkt zweierlei: Zum einen wird er zur Spülung des Brennraumes 1 verwendet, indem er das Verbrennungsgas aus der Brennkammer 1 saugt und über die Gemischaufbereitungseinrichtung 2 gegen den Widerstand von Drosseln (wie weiter unten beschrieben) neues Gemisch in die Brennkammer 1 saugt, zum anderen wird er in mechanische Arbeit umgesetzt, indem er den Kolben 11 nach oben zieht.

Wenn der Kolben 11 etwa drei Viertel seines Weges zum oberen Totpunkt zurückgelegt hat, ist die Spülung der Brennkammer abgeschlossen und etwa Atmosphärendruck in der Brennkammer 1 und im Zylinder erreicht, sodaß das über eine Feder 53 in Schließrichtung vorgespannte Einlaßventil 21 schließt. Etwa zum gleichen Zeitpunkt öffnet das Auslaßventil 43. Dieses wird von einem Ringspalt 14 zwischen Zylinderkopf 13 und Zylinderwand 44 gebildet, der auf der Seite des Zylinderkopfes 13 von einer elastischen Membran 20 begrenzt wird. Diese elastische Membran 20 ist über einer der Zylinderwandung 44 gegenüberliegenden Sacknut 19 im Zylinderkopf 13 angeordnet und dichtet diese ab, wobei die Sacknut 19 über eine Steuerleitung 45 mit einem Druckmedium beaufschlagbar ist. Wenn das Druckmedium in die Sacknut 19 eingepreßt wird, wird die Membran unter Vergrößerung ihrer Oberfläche gegen die Zylinderwand 44 gedrückt und verschließt den Ringspalt 14. Wird der Druck abgelassen, so gibt die Membran den Ringspalt frei.

Während sich der Kolben 11 weiter in Richtung des oberen Totpunktes bewegt, wird das Verbrennungsgas aus der Pumpkammer 12 durch die Sammelkammer 15, die Überströmleitung 16, den Kühler 17 und die Auspuffleitung 46 gedrückt. Im Bereich des oberen Totpunktes des Kolbens 11 wird ein an der Oberseite des Kolbens 11 angeordnetes konkav gewölbtes elastisches Kissen 47 gegen den Zylinderkopf 13 gedrückt und preßt dadurch die restliche Kühlflüssigkeit aus der Pumpkammer 12. Im Kühler 17 wird mit dem Verbrennungsgas mitgeführte Kühlflüssigkeit abgeschieden, die sich im Kühlflüssigkeitsspeicher 18 sammelt.

Da der Kolben 11 aufgrund des Einsprühens einer Kühlflüssigkeit im Implosionstakt keiner besonderen thermischen Belastung ausgesetzt ist, kann dieser aus einem leichten Kunststoff bestehen. Weiters können zur Ermöglichung eines ölschmierungsfreien Laufs die Reibungsflächen des Zylinders und des Kolbens aus Materialien mit niedrigen Reibungskoeffizienten bestehen bzw. mit solchen beschichtet sein, beispielsweise eine Keramikbeschichtung aufweisen. Die Bewegung des Kolbens 11 wird über eine Kolbenstange 48 an eine Antriebswelle 10 in Form einer Kurbelwelle übertragen. Mit der Kurbelwelle sind Nocken 25, 27, 29 und ein Alternator 30, der eine Kombination aus Generator und Elektromotor darstellt, drehfest verbunden. Die Nocke 25 aktiviert die Pumpe 24 für die Kühlflüssigkeit, wenn sich der Kolben im Bereich des unteren Totpunktes befindet. Die Nocke 27 beaufschlagt die Membran 20 des Auslaßventils 43 über die Hydraulikpumpe 26 und schließt das Auslaßventil 43 mit Ausnahme der Austriebphase des Verbrennungsgases und der Kühlflüssigkeit, welche zwischen etwa vier Fünftel des Weges des Kolbens vom unteren Totpunkt zum oberen Totpunkt und dem oberen Totpunkt des Kolbens erfolgt. Die Nocke 29 betätigt den Unterbrecher 28, der der Steuereinrichtung 3 den Zündzeitpunkt für die Zündstange 41 vorgibt, wenn sich der Kolben 11 im Bereich des oberen Totpunktes befindet.

Der Alternator 30 kann einerseits als Generator zur Erzeugung von elektrischer Energie betrieben werden, andererseits als Elektromotor zum Starten des Verbrennungsmotors.

Die Kurbelwelle ist über die Wellenverbindung 9 mit dem hydrostatischen Getriebe 49 verbunden, welches einen geschlossenen Hydraulikkreis 50 mit der hydrostatischen Verstellpumpe 7 und dem Hydromotor 5, der die Antriebsachse 4 des Kraftfahrzeuges antreibt. Das hydrostatische Getriebe 49 ist in seinem Übersetzungsverhältnis stufenlos verstellbar, indem der Rotor 54 der hydrostatischen Verstellpumpe über den Verstellmotor 8, der von der Steuereinrichtung 3 steuerbar ist, in seiner Exzentrizität verstellt wird und dadurch die Förderleistung der Verstellpumpe 7 verändert wird. Die Verstellpumpe 7 kann über das Kurzschlußventil 6 kurzgeschlossen werden.

Bei gleichbleibender Gemischbeladung der Brennkammer 1 bestimmt sich die Leistung des Verbrennungsmotors aus der Taktzahl des Motors, welche über das hydrostatische Getriebe 49 beeinflußt werden kann. Zur Erhöhung der Fahrzeuggeschwindigkeit muß die Leistungsabgabe, d. h. die Taktzahl des Motors erhöht werden. Um dies zu erreichen, wird die am Motor anliegende Last durch Verringerung des Übersetzungsverhältnisses des Getriebes 49 kurzzeitig verringert, indem die Förderleistung der Verstellpumpe 7 über den Verstellmotor 8 verringert wird. Bei Verringerung der anliegenden Last erhöht sich die Drehzahl des Verbrennungsmotors selbsttätig. Wenn die gewünschte Drehzahl erreicht ist, wird die Förderleistung der Verstellpumpe 7 wiederum so weit erhöht, daß die Drehzahl des Motors nunmehr konstant bleibt.

Falls dagegen eine Überleistung des Motors vorliegt, wird die Zündung der Zündstange 41 abgeschaltet und das Kurzschlußventil 6 geöffnet. Dies bewirkt einen Freilauf des Hydromotors 5, und die Verstellpumpe 7 bleibt stehen. Sobald wieder Motorleistung benötigt wird, wird das Kurzschlußventil geschlossen und der Hydromotor wirft die Pumpe wiederum an. Kurbelwelle 10 und Kolben 11 bewegen sich und die Zündung wird wieder eingeschaltet.

Zum Starten des Verbrennungsmotors bei stehendem Fahrzeug wird die Antriebswelle 10 kurzzeitig von dem als Elektromotor betriebenen Alternator 30 angetrieben. Dabei wird die Verstellpumpe 7 auf Last 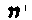 Null" (d. h. keine Förderung von Hydraulikfluid) verstellt, oder es wird das Kurzschlußventil 6 geöffnet.

Zur Vorgabe der Fahrzeuggeschwindigkeit oder der Leistung des Verbrennungsmotors ist eine mit der Steuereinrichtung 3 verbundene Stelleinrichtung 51 vorgesehen. Ein Rückwärtsgang kann dadurch realisiert werden, daß die Verstellpumpe 7 derart verstellt wird, daß sich die Förderrichtung des Hydraulikfluids im Hydraulikkreis 50 umdreht.

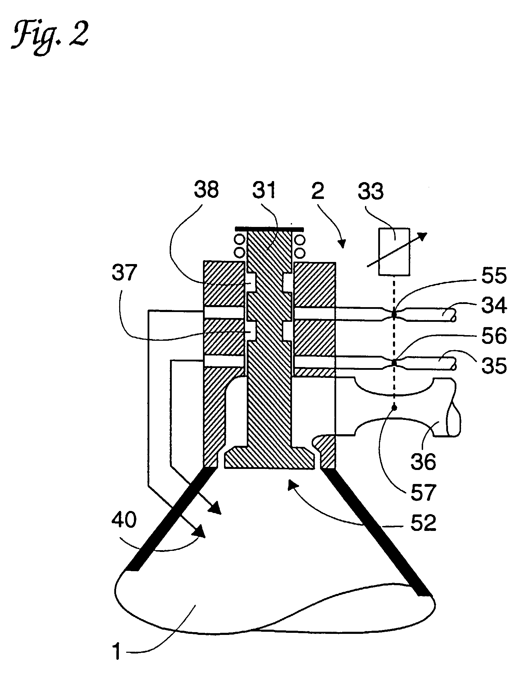

In Fig. 2 ist die Gemischaufbereitungseinrichtung 2 schematisch dargestellt. Neben einer Leitung 36 für die Frischluft und einer Leitung 35 für den Kraftstoff ist eine druckwasserbeaufschlagte Leitung 34 vorgesehen, um über die Sprühdüse 40 zusätzlich Wasser in die Brennkammer 1 einzusprühen, durch das der Stickoxydanteil im Verbrennungsgas verringert wird. Die Leitungen 34, 35, 36 sind gedrosselt, wobei ein von der Steuereinrichtung 3 angesteuerter Regler 33 für die Einlaßdrosseln 55, 56, 57 vorgesehen ist. In Abhängigkeit von der Drehzahl des Verbrennungsmotors stehen unterschiedliche Zeiten zur Verfügung, die Brennkammer 1 während des Implosionstaktes zu laden (das Druckgefälle in der Brennkammer bleibt dabei immer konstant). Aus diesen Zeiten bestimmt ein Rechner der Steuereinrichtung 3 die erforderlichen Drosselöffnungen, welche über den Regler 33 eingestellt werden.

Das Einlaßventil 52 für die Frischluft wird durch ein in Schließrichtung vorgespanntes, bei einem Unterdruck in der Brennkammer 1 öffnendes Rückschlagventil gebildet, wobei durch den Ventilstößel 31 dieses Ventils gleichzeitig Einlaßventile 37, 38 für den in diesem Fall gasförmigen Kraftstoff und das Druckwasser gebildet werden, sodaß bei einer Öffnung des Einlaßventils 52 gleichzeitig auch die Einlaßventile 37, 38 geöffnet werden.

Neben gasförmigen Kraftstoffen, wie beispielsweise Erdgas, kommen ebenso flüssige Kraftstoffe in Frage, wobei die Gemischaufbereitungseinrichtung 2, die Verhältnisse zwischen den Volumina der Brennkammer und der Pumpkammer und die Steuerung durch die Steuereinrichtung an den jeweils verwendeten Kraftstoff entsprechend anzupassen ist.

Als stufenloses verstellbares Getriebe sind unterschiedliche mechanische oder hydraulische Getriebe denkbar und möglich. Anstelle einer einzelnen Brennkammer und dieser zugeordneten Pumpkammer könnten auch zwei oder mehrere Brenn- und Pumpkammern vorgesehen sein, die auf die gleiche Welle wirken. Auf diese Weise könnte beispielsweise eine Zweizylindermaschine realisiert werden, deren Brennkammern zu unterschiedlichen Zeiten zünden.

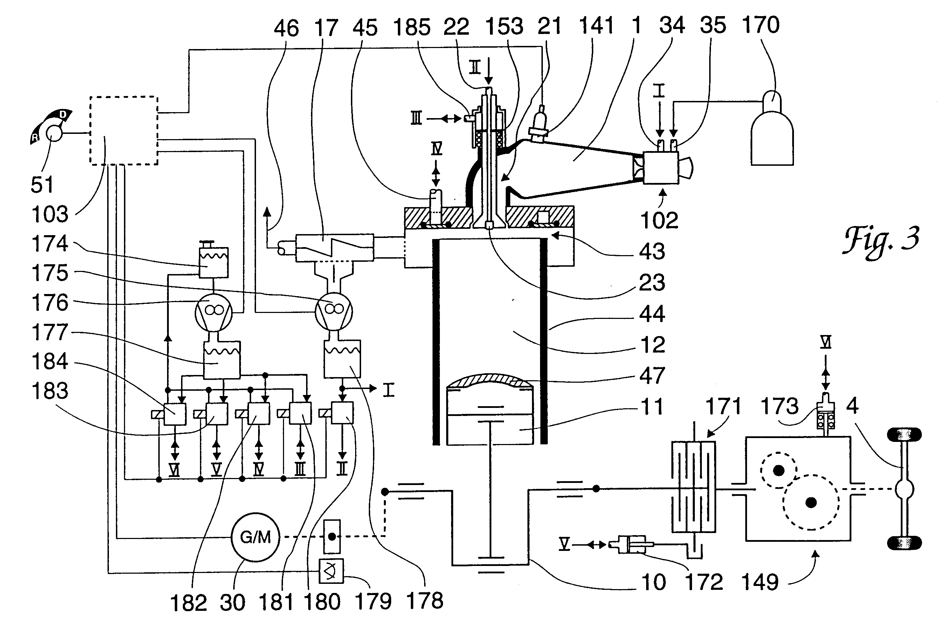

Ein zweites Ausführungsbeispiel der Erfindung ist in Fig. 3 dargestellt, wobei gleichbleibende Teile mit dem gleichen Bezugszeichen versehen sind. Die Funktionsweise ist in wesentlichen Teilen identisch wie die des ersten Ausführungsbeispiels und die Abweichungen werden im folgenden beschrieben.

Der Drehwinkel der Antriebswelle wird von einem Fühler 179 aufgenommen, dessen Ausgangssignal von der Steuereinrichtung 103 ausgewertet wird. Die Betätigungseinrichtung zum Einsprühen von Kühlflüssigkeit, welches in diesem Fall Wasser ist, umfaßt eine Wasserdruckpumpe 175, die das aus dem Kühler 17 abgeschiedene Wasser in einen Druckspeicher 178 pumpt, sowie ein Ventil 180, das von der Steuereinrichtung 103 geöffnet wird, wenn sich der Kolben etwa im Bereich des unteren Totpunktes befindet.

Ein weiterer wichtiger Unterschied dieses Ausführungsbeispiels besteht darin, daß das Öffnen des Einlaßventils 21 der Pumpkammer 12 von der Steuereinrichtung 103 auslösbar ist. Dazu ist ein von der Steuereinrichtung 103 betätigbares Ventil 181 vorgesehen, welches in geöffnetem Zustand den Druck des sich im Druckspeicher 177 befindenden Hydraulikfluids auf die Steuerleitung 185 legt und den Ventilstößel des Einlaßventils 21 gegen die Kraft der Feder 153 in die geöffnete Stellung verschiebt. Die Federkraft der Feder 153 ist in diesem Fall so stark bemessen, daß das Ventil 21 im Normalbetrieb auch bei Vorliegen eines Unterdrucks in der Pumpkammer 12 oder eines Überdrucks in der Brennkammer 1 geschlossen bleibt, wenn die Steuerleitung 185 drucklos ist. Der Druck im Druckspeicher 177 wird dabei durch eine Hydraulikpumpe 176 erzeugt, welche Hydraulikfluid aus dem Reservoir 174 in den Druckspeicher 177 pumpt.

Die Verwendung des steuerbaren Einlaßventils 21 erlaubt neben der weiten unten beschriebenen Steuerung der Leistung des Verbrennungsmotors mittels Leertakten auch eine teilweise Überschneidung von Implosionstakt und Explosionstakt. Dazu wird das sich im Brennraum 1 befindende Gemisch bereits gezündet, während sich der Kolben 11 noch in der Aufwärtsbewegung befindet, wobei das Einlaßventil 21 geschlossen ist und erst im Bereich des oberen Totpunktes des Kolbens 11 über das Ventil 181 von der Steuervorrichtung 103 geöffnet wird. Es steht dadurch mehr Zeit für die sich relativ langsam ausbreitende Verbrennung des unter atmosphärischem Druck stehenden Gemisches in der Brennkammer 1 zur Verfügung, sodaß auf eine Zündeinrichtung mit mehreren Zündpunkten verzichtet werden kann und als Zündeinrichtung beispielsweise eine herkömmliche Zündkerze 141 verwendbar ist.

Weiters kann durch die Steuerbarkeit des Einlaßventils 21 auf die steuerbaren Drosseln der Gemischaufbereitungseinrichtung 102 verzichtet werden. Diese weist in diesem Fall konstante Einlaßöffnungen für die Frischluft, für den aus dem Treibstofftank 170 zugeführten vorzugsweise gasförmigen Kraftstoff und für das zur NO_{X} - Reduktion einzusprühende Wasser auf. Nach Beginn des Implosionstaktes wird das Einlaßventil 21 nur so lange offengehalten, bis die Brennkammer vollständig mit frischem Gemisch befüllt ist, und anschließend geschlossen. Bei gleichmäßiger Beladung der Brennkammer 1 und gleichem Druckgefälle in der Brennkammer 1 bleibt dieser Zeitraum unabhängig von der Drehzahl des Motors konstant.

Im Gegensatz zum ersten Ausführungsbeispiel der Erfindung ist die Antriebswelle 10 nunmehr über eine Kupplung 171 mit einem mechanischen kraftschlüssigen Mehrganggetriebe 149 verbunden. Die Kupplung 171 kann über einen Druckkolben 172 geöffnet werden, der von einem von der Steuereinrichtung 103 angesteuterten Ventil 183 mit unter Druck stehendem Hydraulikfluid aus dem Druckspeicher 177 beaufschlagbar ist. Ebenso wird ein Gangwechsel des Mehrganggetriebes 149 durch Beaufschlagung eines oder mehrerer Kolben 173 bewirkt, welche durch das Öffnen eines oder mehrerer Ventile 184 erfolgt, die ebenfalls von der Steuereinrichtung 103 angesteuert werden.

Die Steuerung bzw. Regelung der Leistung des Verbrennungsmotors erfolgt nunmehr dadurch, daß neben Arbeitstakten, in denen eine Zündung des Gemisches in der Brennkammer erfolgt, Leertakte durchgeführt werden, in denen das Gemisch ungezündet in der Brennkammer 1 verbleibt. Während dieser Leertakte bleibt das Einlaßventil 21 geschlossen und das Auslaßventil 43 geöffnet, sodaß der Kolben 11 im wesentlichen leistungslos Luft aus der und in die Abgasleitung 46 pumpt.

Je nach gerade benötigter Leistung wird von der Steuereinrichtung 103 das Verhältnis zwischen Arbeitstakten und Leertakten eingestellt. Die jeweils maximale Leistung bei einer bestimmten Taktzahl des Motors liegt dann vor, wenn nur Arbeitstakte und keine Leertakte durchgeführt werden. Bei einer bestimmten an der Antriebsachse 4 des Kraftfahrzeuges anliegenden Last wird der Gang des Getriebes 149 derart ausgewählt, daß die maximale Leistung des Verbrennungsmotors bei der sich daraus ergebenden Drehzahl der Antriebswelle 10 (bzw. Taktzahl des Motors) größer ist als die zur Aufbringung der Last benötigte Leistung. Die Differenz zwischen der Maximalleistung (nur Arbeitstakte) und der momentan benötigten Leistung, die sich aus der Mischung von Arbeitstakten und Leertakten ergibt, bildet eine momentane Leistungsreserve. Soll das Fahrzeug in der Folge beschleunigt werden, so werden weniger oder gar keine Leertakte durchgeführt und die Umdrehungsgeschwindigkeit der Ausgangswelle 4 bzw. der Antriebswelle 10 erhöht sich. Mit Erreichen der Höchstdrehzahl des Motors (beispielsweise 10.000 Umdrehungen pro Minute) wird die Kupplung 171 von der Steuereinrichtung 103 über das Ventil 183 und den Druckkolben 172 geöffnet, und von der Steuereinrichtung 103 wird über das Ventil 184 und den Druckkolben 173 ein höherer Gang eingelegt sowie anschließend die Kupplung 171 wieder geschlossen. In analoger Weise wird das Einlegen eines niedrigeren Ganges durchgeführt, wenn die Leistungsreserve des Motors zu gering wird. Im Schiebebetrieb des Fahrzeuges, wenn keine Last anliegt, wird die Kupplung 171 geöffnet und der Motor bleibt stehen, sodaß keine Verlustleistungen auftreten.

Zum Starten des Motors bei stehendem Fahrzeug wird wiederum der als Elektromotor betriebene Alternator 30 verwendet, wobei die Kupplung 171 anfänglich geöffnet ist. Die Ventilsteuerung der Einlaß- und Auslaßventile 21, 43 erfolgt dabei so, daß die Abwärtsbewegung des Kolbens 11 zum Befüllen der Brennkammer mit Gemisch verwendet wird.

Weitere Teile der Sensorik, wie die Sensoren zur Messung der Fahrgeschwindigkeit und zur Druckmessung in der Brennkammer 1 (wodurch festgestellt wird, ob beim Starten des Motors noch Gemisch in der Brennkammer 1 vorliegt oder dieses zuerst eingefüllt werden muß), ist in der Fig. 3 nicht dargestellt und deren Realisierung liegt im Belieben des Fachmannes.

Um trotz der Leertakte eine ausreichende Laufruhe des Motors zu gewährleisten, ist es vorteilhaft, wenn zumindest zwei zylinderförmige Pumpkammern 12 mit zugehörigen Brennkammern 1 vorgesehen sind, wobei die jeweiligen Explosions- und Implosionstakte um 180 Grad phasenverschoben sind. In analoger Weise wären auch Motoren mit drei oder mehr Zylindern und zugehörigen Pumpkammern denkbar und möglich, die jeweils phasenverschoben auf die Kurbelwelle wirken.

Anstelle der Hydraulik zur Steuerung des Einlaßventiles 21, des Auslaßventiles 43, der Kupplung 171 und des Mehrganggetriebes 149 könnte auch eine Pneumatik vorgesehen sein.

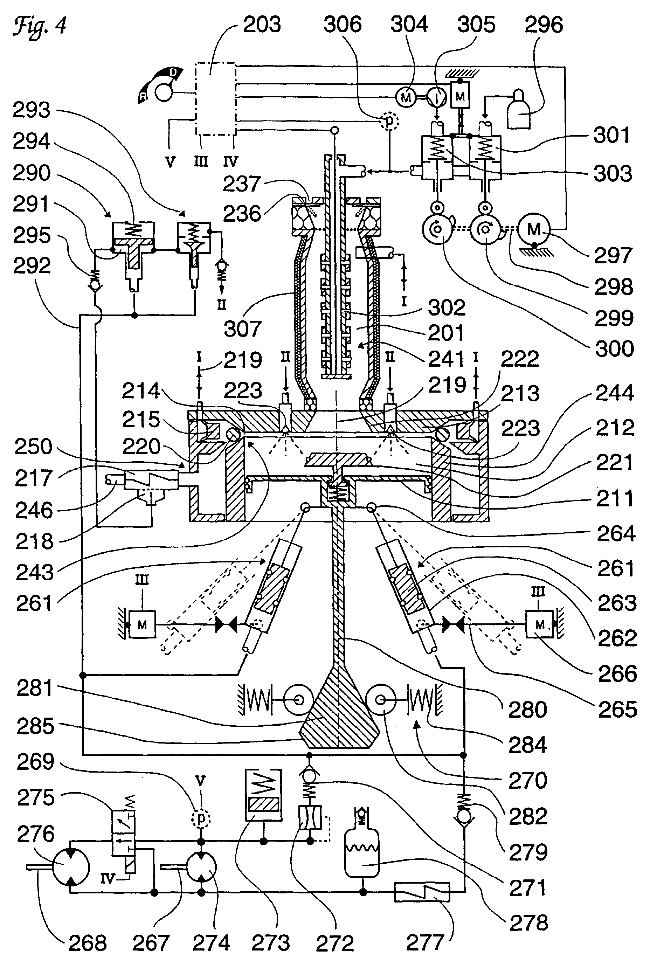

Bei dem in Fig. 4 gezeigten Ausführungsbeispiel wird das Einlaßventil der als Zylinderraum ausgebildeten Pumpkammer 212, über welches die Brennkammer 201 mit der Pumpkammer 212 in Verbindung steht, von einem im Kolben 211 der Pumpkammer federnd gelagerten Ventilteller 221 und einem in der Einlaßöffnung 219 der Pumpkammer vorgesehenen Ventilsitz 222 gebildet. Zu Beginn des Explosionstaktes nach der Zündung des brennbaren Gemisches in der Brennkammer arbeitet der sich aufbauende Druck daher zunächst gegen den Federdruck des Ventiltellers 221 sowie gegen den weiter unten beschriebenen Federspeicher 270, sodaß sich in der Brennkammer 201 zunächst ein Druck aufbauen kann und die Verbrennung fortschreiten kann, wodurch kein unverbranntes Gemisch in die Pumpkammer 212 gelangen kann.

Während der Abwärtsbewegung des Kolbens 211 im Explosionstakt treibt dieser bei diesem Ausführungsbeispiel direkt eine verstellbare Hydraulikpumpeinrichtung an, die die Hydraulik-Kolben-Zylindereinheiten 261, 261' umfaßt. Diese umfassen jeweils in Zylindern 262 gelagerte und über Dichtringe abgedichtete Kolben 263, welche über ein Gelenk 264 am Kolben 211 der Pumpkammer 212 befestigt sind. Die beiden Hydraulik-Kolben-Zylindereinheiten 261, 261' sind beidseits des Kolbens 211 und symmetrisch zu diesem angeordnet, sodaß bei einer Kraftübertragung des sich aus dem Zylinder 250 auswärts bewegenden Kolbens 211 auf die Kolben 263 der Hydraulik-Kolben-Zylindereinheiten 261, 261' keine auf den Kolben 211 seitlich wirkende resultierende Gesamtkraft auftritt. Es werden dadurch die mechanischen Reibungsverluste des Kolbens 211 minimiert.

Die Zylinder 262 der Hydraulik-Kolben-Zylindereinheiten 261, 261' sind jeweils gelenkig an Verstellbügeln 265 befestigt, über die die Hydraulik-Kolben-Zylindereinheiten 261, 261' mittels jeweiliger Stellmotoren 266 symmetrisch in ihrer Winkelstellung gegenüber dem Kolben 211 verändert werden können. Eine derartige veränderte Winkelstellung ist in Fig. 4 durch strichlierte Linien angedeutet. In Abhängigkeit von der jeweiligen Winkelstellung der Hydraulik-Kolben-Zylindereinheiten 261, 261' ändert sich der Hub der Kolben 263 bei der Bewegung des Kolbens 211 vom oberen Totpunkt zum unteren Totpunkt und damit das von den Hydraulik-Kolben-Zylindereinheiten 261, 261' gepumpte Volumen von Hydraulikflüssigkeit sowie der Förderdruck. Da die Kraftbeaufschlagung der Kolben 263 axial erfolgt, werden schädliche Reibungsverluste wiederum minimiert.

Anstelle von zwei spiegelbildlich angeordneten Hydraulik-Kolben-Zylindereinheiten können auch drei oder mehr symmetrisch zum Kolben 211 angeordnete Hydraulik-Kolben-Zylindereinheiten vorgesehen sein.

Die von den Hydraulik-Kolben-Zylindereinheiten 261, 261' geförderte Hydraulikflüssigkeit wird über ein Rückschlagventil 271 und eine Drossel 272 einem Hydraulikmotor 274 zugeführt, wobei zwischen Drossel 272 und Hydraulikmotor 274 ein Federspeicher 273 an die Hydraulikleitung angeschlossen ist, welcher die bei den einzelnen Pumptakten gebildeten Druckimpulse glättet. Der Hydraulikmotor 274, der die Antriebswelle 267 antreibt, ist unverstellbar ausgebildet (Konstant-Hydraulikmotor), d.h. Drehzahl und Drehmoment sind bei gegebenem Durchfluß an Hydraulikflüssigkeit und Druck der Hydraulikflüssigkeit nicht einstellbar. Besonders bevorzugt ist die Verwendung eines Schrägscheibenkolbenmotors, der über einen großen Drehzahl- und Drehmomentbereich einen sehr hohen Wirkungsgrad aufweist. Der Abfluß des Hydraulikmotors 274 steht über eine Rückflußleitung, in der ein Kühler 277 und ein weiteres Rückschlagventil 278 angeordnet ist, mit den Zylindern 262 der Hydraulik-Kolben-Zylindereinheiten 261, 261' in Verbindung. Weiters ist an der Rückflußleitung zwischen Hydraulikmotor 274 und Rückschlagventil 278 ein Hydraulikspeicher 278 in Form eines Druckspeichers angeschlossen. Dieser hilft bei dem im folgenden beschriebenen an den Explosionstakt anschließenden Implosionstakt, die Hydraulikflüssigkeit in die Zylinder 262 der Hydraulik-Kolben-Zylindereinheiten 261, 261' zurückzuführen.

Die Drossel 272 ist selbststeuernd und verringert ihren Öffnungsgrad bei geringem in der Hydraulikleitung vorliegendem Gegendruck, um eine gewisse Minimallast für den Kolben 211 vorzugeben.

Um bei allen in der Praxis benötigten Motorleistungen in einem Arbeitsbereich des Hydromotors zu arbeiten, der einen möglichst hohen Wirkungsgrad aufweist, ist ein zweiter Hydromotor 276 vorgesehen, der parallel zum Hydromotor 274 liegt und über das Ventil 275 bei Bedarf zugeschaltet werden kann. Zur Steuerung ist der Drucksensor 269 vorgesehen. Dieser zweite Hydromotor kann auf die gleiche Antriebswelle wie der erste Hydromotor oder auf eine zweite Antriebswelle 268 wirken.

Der Implosionstakt wird wiederum am Ende des Explosionstaktes, wenn sich der Kolben 211 im Bereich seines unteren Totpunktes befindet, durch Aktivierung der Sprühdüsen 223 und Einsprüchen einer Kühlflüssigkeit, eingeleitet. Der sich ausbildende Unterdruck zieht den Kolben 211 aufwärts bzw. einwärts in Richtung seines oberen Totpunktes und wird weiters zur Spülung der Brennkammer 201 verwendet, indem er Verbrennungsgas aus der Brennkammer 201 saugt, wobei durch die von einem selbstsperrenden Rückschlagventil 236 verschlossene Einlaßöffnung 237 Frischluft in die Brennkammer 201 nachströmt. Brennstoff wird bei diesem Ausführungsbeispiel erst am Ende des Explosionstaktes in die Brennkammer 201 zugeführt, wie weiter unten beschrieben wird.

Die im Implosionstakt auf den Kolben 211 wirkende Kraft wird nicht direkt in Antriebsleistung umgesetzt, sondern zunächst in einem Federspeicher 270 zwischengespeichert. Der Federspeicher 270 wird von einer keilförmigen Erweiterung 281 der am Kolben 211 angeordneten Pleuelstange gebildet, welche eine Lauffläche für die mit Federn 284 verbundenen Rollen 282 bildet. Bei der Einwärtsbewegung des Kolbens 211 werden die Federn 284 gespannt. Kurz vor Erreichen des oberen Totpunktes gelangen die Rollen 282 zur Gegenschräge 285. Dadurch muß bei Zündung eines neuen Explosionstaktes zunächst eine bestimmte Gegenkraft überwunden werden, welche, wie oben beschrieben, zu einer Zeitverzögerung und Verhinderung des Ausströmens von unverbranntem Arbeitsgas dient.

Wenn sich der Kolben 211 im Implosionstakt noch etwa ein Drittel seines Weges vom oberen Totpunkt entfernt befindet, schließt der Ventilteller 221 die Einlaßöffnung 219 der Pumpkammer 212. Zu diesem Zeitpunkt ist das Verbrennungsgas in der Brennkammer 201 vollständig durch Frischluft ersetzt. Beim weiteren Weg des Kolbens 211 in Richtung seines oberen Totpunktes wird das sich in der Pumpkammer 212 befindende Verbrennungsgas über Atmosphärendruck komprimiert und wird durch das als selbstsperrendes Rückschlagventil ausgebildete Auslaßventil 243 zusammen mit der Kühlflüssigkeit aus der Pumpkammer ausgepreßt. Das Auslaßventil 243 wird von einem Ringspalt 214 zwischen Zylinderkopf 213 und Zylinderwand 244 um den ein vorgespannter elastischer O-Ring 220 angeordnet ist, gebildet. Außerhalb des ersten O-Rings 220 befindet sich ein zweiter O-Ring 215, der über eine Druckleitung 219 mit dem Druck des Verbrennungsgases in der Brennkammer 201 beaufschlagbar ist. Während des Explosionstaktes wird daher der erste O-Ring 220 vom zweiten O-Ring 267, dessen rückseitige Beaufschlagungsfläche größer ist als die Öffnungsfläche des Ringspaltes 214, gegen den Ringspalt gedrückt. Im Implosionstakt bei einem niedrigen Druck in der Brennkammer 201 und zunehmendem Druck in der Pumpkammer 212 öffnet das Auslaßventil 243 und das Verbrennungsgas sowie eingesprühte Kühlflüssigkeit können aus der Pumpkammer ausströmen. Das Auslaßventil ist somit selbststeuernd und es werden keine relativ langsamen elektronischen Ventile benötigt.

Das Verbrennungsgas entweicht in der Folge durch den Auspuff 246 und die Kühlflüssigkeit wird im Kühler 217 kondensiert und sammelt sich im Vorratsbehälter 218. Im Explosionstakt wird von dort Kühlflüssigkeit durch die Kolbenpumpe 290 in den einen Druckspeicher darstellenden Zylinderraum 291 dieser Kolbenpumpe gefördert, wobei die Kolbenpumpe 290 durch den von den Hydraulik-Kolben-Zylindereinheiten 261, 261' erzeugten Hydraulikdruck über die Hydraulikleitung 292 betätigt wird. An die Hydraulikleitung 292 ist weiters das selbstöffnende Ventil 293 angeschlossen, welches im Explosionstakt vom Druck auf der Hydraulikleitung 292 geschlossen wird. Am Ende des Explosionstaktes, wenn der Kolben 211 der Pumpkammer 212 seinen unteren Totpunkt erreicht und der Druck auf der Hydraulikleitung 292 abfällt, öffnet sich das Ventil 293 und die im Zylinderraum 291 gespeicherte Kühlflüssigkeit wird von einer Feder 294 der Kolbenpumpe 290 aus dem Zylinderraum 291 durch das Ventil 293 gedrückt, wobei ein Zurückströmen der Kühlflüssigkeit durch das Rückschlagventil 295 verhindert wird. Die an das Ventil 293 angeschlossenen Sprühdüsen 223 werden mit Kühlflüssigkeit druckbeaufschlagt, wodurch ein Implosionstakt eingeleitet wird. Die Sprüheinrichtung ist somit selbststeuernd und benötigt keine relativ langsame elektromagnetisch betätigbare Ventile.

Zu dem Zeitpunkt des Implosionstaktes, zu dem die Einlaßöffnung 219 vom Ventilteller 221 verschlossen wird, kann die Brennkammer für einen neuen Explosionstakt vorbereitet werden. Zu diesem Zeitpunkt ist die Brennkammer mit Frischluft gefüllt, wobei der Druck der Frischluft in der Brennkammer von der Schließkraft des Einlaßventils 236 abhängt und beispielsweise 0,9 bar betragen kann. Der Verbrennungsluft kann nunmehr Kraftstoff zugemischt werden, welcher in einem Tank 296 gespeichert ist und beispielsweise gasförmig sein kann. Ein von der Steuereinrichtung 203 angesteuerter Elektromotor treibt eine Nockenwelle 298 an, auf der ein Treibstoffnocken 299 und ein Luftnocken 300 angeordnet sind. Zunächst öffnet der Treibstoffnocken ein Treibstoffventil 301, wodurch gasförmiger Kraftstoff aus dem Tank 296 in die Brennkammer 201 strömen kann. Die Zufuhr des Kraftstoffes in die Brennkammer erfolgt dabei durch eine Leitung in der Zündstange 241, welche mehrere Auslaßöffnungen 302 aufweist. Es kann dadurch sehr rasch ein gleichmäßiges Gemisch in der gesamten Brennkammer 201 erzeugt werden. Da in den Zulaufleitungen verbleibender Kraftstoff beim nächsten Implosionstakt zu Verlusten führen würde, wird anschließend an die Befüllung der Brennkammer mit Kraftstoff eine kurze Spülung der Zufuhrleitungen mit Luft durchgeführt, wozu der Luftnocken 300, ein von diesem betätigtes Luftventil 303 und ein aus einem Motor 304 und einer Pumpe 305 gebildeten Kompressor vorgesehen ist.

Anschließend an die Befüllung der Brennkammer 201 mit Kraftstoff und die Spülung der Zufuhrleitungen mit Luft, was vom Drucksensor 306 erfaßt wird, wird von der Steuereinrichtung 203 ein Zündsignal an die Zündstange 241 ausgegeben, wodurch ein neuer Explosionstakt mit anschließendem Implosionstakt eingeleitet wird. Die Frequenz, mit der solche Explosions- und anschließende Implosionstakte durchgeführt werden, wird somit durch die Drehzahl des Motors 297 bestimmt, wodurch die anfallende Leistung festgelegt wird. Wie diese Leistung in Drehzahl bzw. Drehmoment des Hydromotors 274 umgesetzt wird, wird dagegen durch die Einstellung der die Hydraulik-Kolben-Zylindereinheiten 261, 261' aufweisende Hydraulikpumpeinrichtung bestimmt.

Um bei allen Drehzahlen des Elektromotors 297 eine gleichmäßige Befüllung der Brennkammer 201 mit Kraftstoff bzw. eine gleichmäßige Spülung der Kraftstoffzufuhrleitungen mit Luft zu erreichen, ist ein von der Steuereinrichtung 203 betätigbarer Stellmotor 306 vorgesehen, der die Eintrittsöffnungen in die Ventile 301, 303 in Abhängigkeit von der Drehzahl des Elektromotors 297 unterschiedlich stark drosselt.

Da der Kraftstoff bei diesem Ausführungsbeispiel erst gegen Ende des Implosionstaktes zugeführt wird und daher keine Gefahr einer vorzeitigen Selbstminderung des Gemisches gegeben ist, kann die Brennkammer mit einer zusätzlichen Isolierung 307 umgeben werden, um Wärmeverluste zu minimieren.

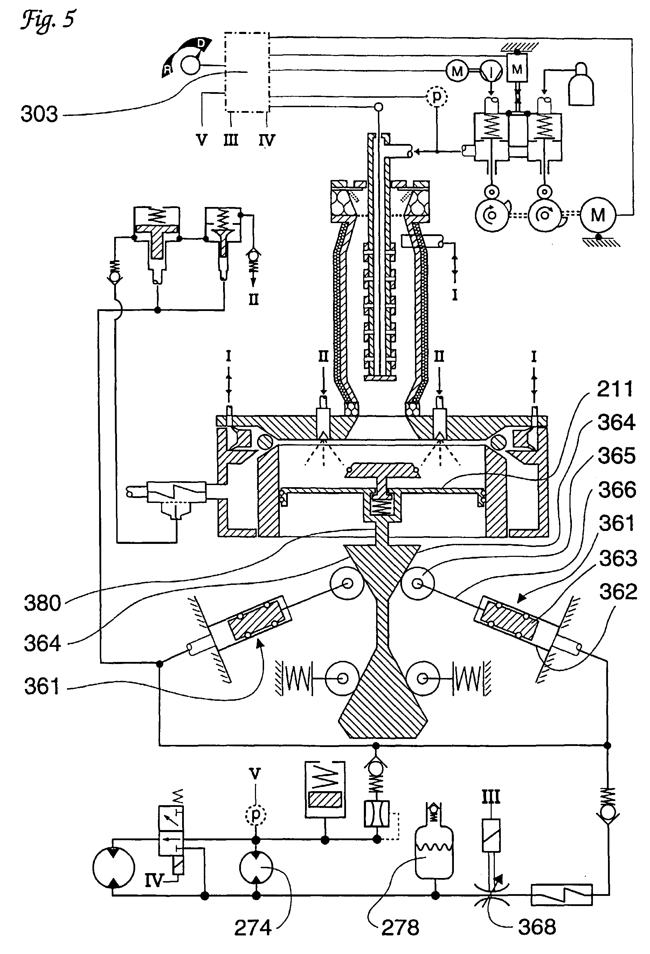

Das in Fig. 5 dargestellte Ausführungsbeispiel unterscheidet sich vom Ausführungsbeispiel nach Fig. 4 in der vom Kolben 211 angetriebenen Hydraulikpumpeinrichtung. Diese weist wiederum zwei symmetrisch zum Kolben 211 angeordnete HydraulikKolben-Zylindereinheiten 361, 361' auf, welche in diesem Fall in einem festen Winkel zur Achse des Kolbens 211 angeordnet sind. Die Kolben 363 der Hydraulik-Kolben-Zylindereinheiten 361, 361' weisen Kolbenstangen 366 auf, an deren Enden Rollen 365 angeordnet sind. Diese Rollen 365 wirken mit keilförmigen, an der Pleuelstange 380 des Zylinders 211 vorgesehenen Betätigungsflächen 364 zusammen, sodaß bei einer Auswärtsbewegung des Kolbens 211 die Kolben 363 in die Zylinder 362 gedrückt werden. In der Rückflußleitung vom Hydraulikmotor 274 zu den Zylindern 362 ist eine von der Steuereinrichtung 303 einstellbare Drossel 368 vorgesehen. Bei der Einwärtsbewegung des Kolbens 211 im Implosionstakt strömt daher Hydraulikflüssigkeit mit einer definierten Geschwindigkeit aus dem Druckspeicher 278 in die Zylinder 362, wodurch sich die Kolben 363 entsprechend nach auswärts bewegen. Am Ende des Implosionstaktes haben sich die Rollen 365 dabei mehr oder weniger von den Betätigungsflächen 364 abgehoben, sodaß bei einem anschließenden Explosionstakt die Energie des Verbrennungsgases zunächst nur in Bewegungsenergie des Kolbens 211 umgesetzt wird und erst ab dem Zeitpunkt der Berührung der Betätigungsflächen 364 mit den Rollen 365 eine Pumpleistung erbracht wird, wobei das Volumen der gepumpten Hydraulikflüssigkeit entsprechend geringer und der Druck entsprechend höher ist. Da die auf die Hydraulik-Kolben-Zylindereinheiten aufgebrachte Kraft wiederum parallel zu deren Achse liegt, werden die Reibungsverluste minimiert. Die übrigen Teile des Verbrennungsmotors nach dem Ausführungsbeispiel der Fig. 5 entsprechen denen des zuvor beschriebenen Ausführungsbeispiels und müssen daher nicht wiederholt werden.

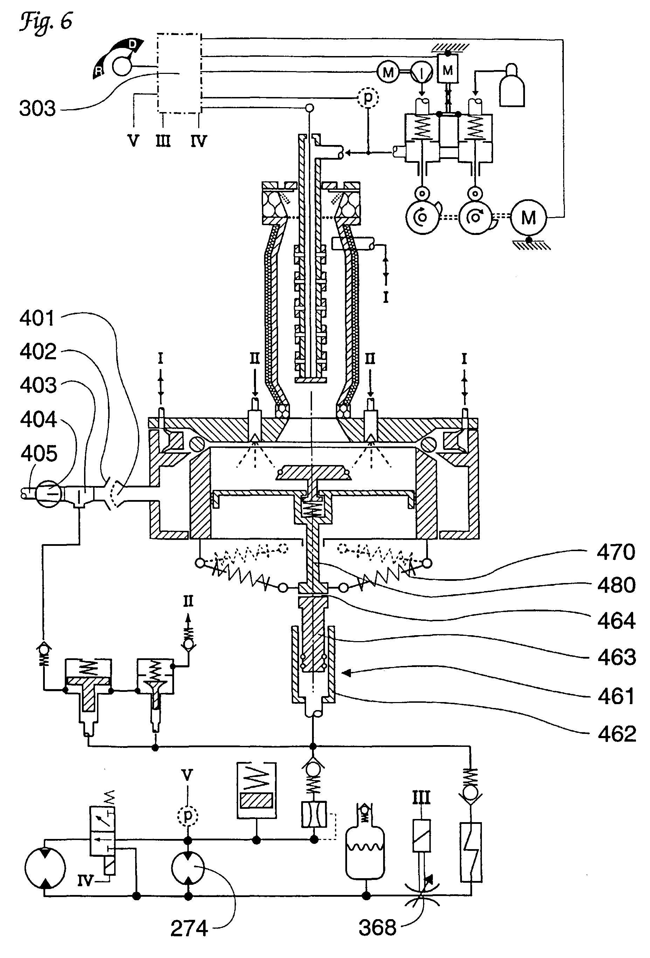

Das in Fig. 6 gezeigte Ausführungsbeispiel unterscheidet sich von dem in Fig. 5 gezeigten wiederum in der verstellbaren Hydraulikpumpeinrichtung. In diesem Fall ist eine einzelne zentrale Hydraulik-Kolben-Zylindereinheit 461 vorgesehen, welche von der als Stößel ausgebildeten Pleuelstange 480 betätigt wird, wobei die Betätigungsfläche 464 in diesem Fall von der Unterseite der als Stößel ausgebildeten Pleuelstange 480 gebildet wird. Wiederum ist in der Rücklaufleitung für die Hydraulikflüssigkeit vom Hydraulikmotor 274 zur Hydraulik-Kolben-Zylindereinheit 461 eine von der Steuereinrichtung 303 verstellbare Drossel 368 vorgesehen, welche die Rücklaufgeschwindigkeit der Hydraulikflüssigkeit in den Zylinder 462 und somit die Geschwindigkeit des Anhebens des Kolbens 463 im Implosionstakt bestimmt. Je nach Einstellung dieser Drossel 368 bestimmt sich das Pumpvolumen und der Pumpdruck im Explosionstakt.

Der Federspeicher zur Speicherung der im Implosionstakt freigesetzten Energie wird in diesem Fall durch die Druckfedern 470 gebildet, deren Funktion völlig dem im Zusammenhang mit Fig. 4 beschriebenen Federspeicher entspricht.

Weiters wird bei diesem Ausführungsbeispiel der in den Fig. 4 und 5 gezeigte Kühler durch die folgende Einrichtung ersetzt: Das Abgas-Wassergemisch aus dem Motor wird über den Sprühkopf 401 in den Luftansaugtrichter 402 gesprüht. Das Abgas-Wassergemisch vermischt sich mit Umgebungsluft im Faktor 1:50 bis 1:100. Dadurch wird das Abgas-Wassergemisch schlagartig auf ca. 30°C abgekühlt. Im Abscheider 403 schlägt sich das dermaßen abgekühlte Wasser nieder. Die Ansaugung der Frischluft erfolgt mittels nachgeschaltetem Saugventilator 404. Das Abgas-Kühlluftgemisch wird über den Auspuff 405 ausgestoßen.

Die übrigen Teile des Verbrennungsmotors gemäß diesem Ausführungsbeispiel sind wiederum entsprechend dem Ausführungsbeispiel nach der Fig. 4 ausgebildet.

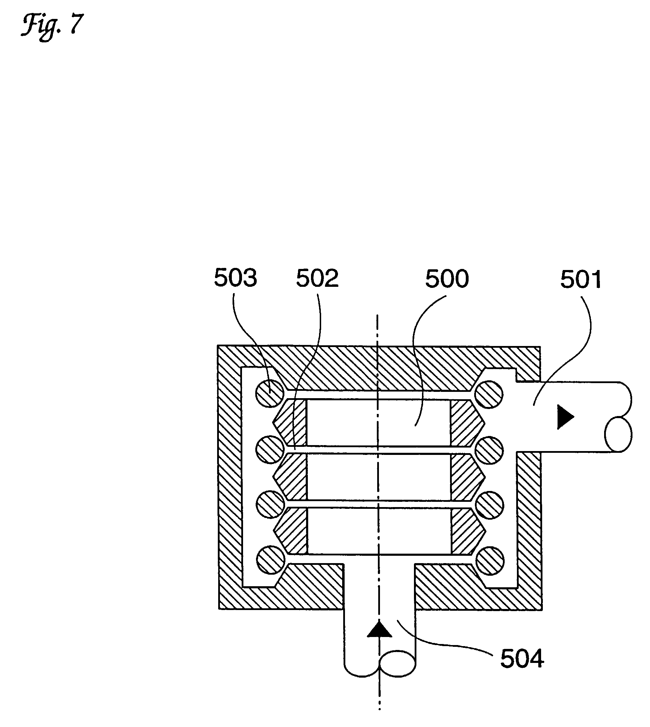

Die im Hydraulikkreis angeordneten Rückschlagventile 271, 279 (vergleiche Fig. 4) müssen bei einem hohen Öffnungsquerschnitt extrem hohe Schaltfrequenzen aufweisen. Ein dafür geeignetes Ventil ist in Fig. 7 dargestellt. Zwischen Eintrittskammer 500 und Austrittskammer 501 sind eine Reihe von spaltenförmigen Öffnungen 502 vorgesehen. Über diese sind vorgespannte O-Ringe 503 angeordnet, welche von unter Druck stehender, durch die Eintrittsöffnung 504 einströmender Hydraulikflüssigkeit von den Spalten 502 abgehoben werden und diese freigeben. Bei Drucklosigkeit in der Eintrittskammer 500 bzw. bei einer Strömung in der Gegenrichtung werden die Spalten 502 dagegen von den O-Ringen 503 verschlossen.

Der erfindungsgemäße Verbrennungsmotor könnte auch andere als zylinderförmige Pumpkammern aufweisen, die beispielsweise nach Art eines Stirlingmotors ausgebildet sind, wobei jeweils eine von der Pumpkammer gesonderte Brennkammer vorgesehen ist.

## Patentansprüche

1. Verbrennungsmotor mit einer Brennkammer, die eine Zündeinrichtung aufweist, zum Verbrennen eines Kraftstoffes unter Bildung eines Verbrennungsgases in einem Explosionstakt, wobei der Verbrennungsmotor eine vom expandierenden Verbrennungsgas verschiebbare starre Wandung aufweist, deren Bewegung auf eine Antriebswelle übertragbar ist, dadurch gekennzeichnet, daß die Brennkammer (1, 201) ein konstantes Volumen aufweist und zur Umsetzung der Energie des Verbrennungsgases in mechanische Energie eine von der Brennkammer (1, 201) gesonderte, mit der Brennkammer (1, 201) in Verbindung stehende Pumpkammer (12, 212) vorgesehen ist, welche die verschiebbare starre Wandung aufweist, wobei vorzugsweise die Pumpkammer (12, 212) von einem Zylinder gebildet wird, in dem ein Kolben (11, 211) verschiebbar gelagert ist, der die verschiebbare starre Wandung bildet.

2. Verbrennungsmotor nach Anspruch 1, dadurch gekennzeichnet, daß die Pumpkammer (12, 212) mit der Brennkammer (1, 201) über ein Einlaßventil (21; 221, 222) in Verbindung steht, welches vorzugsweise von einem im Kolben (211), vorzugsweise federnd, gelagerten Ventilteller (221) und einem in der Einlaßöffnung (219) der Pumpkammer (212) vorgesehenen Ventilsitz (223) gebildet wird.

3. Verbrennungsmotor nach Anspruch 1 oder 2, dadurch gekennzeichnet, daß das maximale Volumen der Pumpkammer (12, 212) wesentlich größer, vorzugsweise etwa fünfmal größer als das Volumen der Brennkammer (1, 201) ist.

4. Verbrennungsmotor nach Anspruch 3, dadurch gekennzeichnet, daß das Volumen der Brennkammer (1, 201) zusammen mit dem maximalen Volumen der Pumpkammer (12, 212) im wesentlichen dem Volumen des expandierten und auf Atmosphärendruck entspannten Verbrennungsgases entspricht.

5. Verbrennungsmotor nach einem der Ansprüche 1 bis 4, dadurch gekennzeichnet, daß die Pumpkammer (12, 212) ein Abgas-Auslaßventil (43, 243) aufweist, welches einen verschließbaren Spalt (14, 214) zwischen Zylinderkopf (13, 213) und Zylinderwand (44, 244) umfaßt, wobei zum Verschluß des Spaltes (214) vorzugsweise ein diesen außen umgebender, unter Vorspannung stehender O-Ring (220) vorgesehen ist, der von einem diesen außen umgebenden zweiten elastischen O-Ring (215), der vom Druck des Verbrennungsgases in der Brennkammer (201) beaufschlagbar ist, gegen den Spalt (214) anpreßbar ist.

6. Verbrennungsmotor nach einem der Ansprüche 1 bis 5, dadurch gekennzeichnet, daß zumindest eine in die Pumpkammer (12, 212) mündende, vorzugsweise im Zylinderkopf (13, 213) angeordnete, Sprühdüse (23, 223) zum Einsprühen einer Kühlflüssigkeit, vorzugsweise von Kühlwasser, zur Einleitung eines an den Explosionstakt anschließenden Implosionstakts vorgesehen ist.

7. Verbrennungsmotor nach einem der Ansprüche 1 bis 6, dadurch gekennzeichnet, daß der Kolben (211) eine verstellbare Hydraulikpumpeinrichtung antreibt, die zumindest eine Hydraulik-Kolben-Zylindereinheit (261, 261', 361, 361', 461) aufweist und die ihrerseits zumindest einen Konstant-Hydraulikmotor (274), vorzugsweise Schrägscheibenkolbenmotor, antreibt.

8. Verbrennungsmotor nach Anspruch 7, dadurch gekennzeichnet, daß der Zufluß des Hydraulikmotors (274) mit der Hydraulikpumpeinrichtung über ein Rückschlagventil (271) verbunden ist und der Abfluß des Hydraulikmotors (274) über eine Rückflußleitung, an die ein Hydraulikspeicher (278), vorzugsweise ein Druckspeicher, angeschlossen ist und in der zwischen dem Anschluß des Hydraulikspeichers (278) und der Hydraulikpumpeinrichtung ein weiteres Rückschlagventil (279) angeordnet ist, mit der Hydraulikpumpeinrichtung in Verbindung steht.

9. Verbrennungsmotor nach Anspruch 8, dadurch gekennzeichnet, daß das Rückschlagventil (271, 279) zwischen einer Eintrittskammer (500) und einer Austrittskammer (501) im Inneren des Ventilkörpers mehrere spaltenförmige Öffnungen (502) aufweist, über die vorgespannte elastische Ringe, vorzugsweise O-Ringe (503), angeordnet sind, welche von unter Druck stehender in das Rückschlagventil durch dessen Eintrittsöffnung (504) einströmender Hydraulikflüssigkeit von den Öffnungen (502) abhebbar sind und diese freigeben.

10. Verbrennungsmotor nach einem der Ansprüche 7 bis 9, dadurch gekennzeichnet, daß zwei oder mehr Hydraulik-Kolben-Zylindereinheiten (261, 261', 361, 361') symmetrisch zum Kolben (211) der Pumpkammer (212) angeordnet sind, derart, daß bei einer Betätigung der Hydraulik-Kolben-Zylindereinheiten bei einer Auswärtsbewegung des Kolbens (211) der Pumpkammer keine seitliche resultierende Kraft auf den Kolben (211) der Pumpkammer ausgeübt wird.

11. Verbrennungsmotor nach Anspruch 10, dadurch gekennzeichnet, daß die Hydraulik-Kolben-Zylindereinheiten einerseits gelenkig mit dem Kolben (211) der Pumpkammer (212) verbunden sind, andererseits an Verstellbügeln (265) gelenkig befestigt sind, über welche die Schrägstellung der Achsen der Hydraulik-Kolben-Zylindereinheiten (261, 261') relativ zur Achse des Kolbens (211) der Pumpkammer zur Verstellung der Pumpmenge und des Pumpdruckes veränderbar sind.

12. Verbrennungsmotor nach einem der Ansprüche 8 bis 10, dadurch gekennzeichnet, daß der bzw. der jeweilige Kolben (362, 462) der Hydraulik-Kolben-Zylindereinheit(en) (361, 361', 461) bei der Auswärtsbewegung des Kolbens (211) der Pumpkammer von einer Betätigungsfläche (364, 464) des Kolbens (211) in den Zylinder (362, 462) der Hydraulik-Kolben-Zylindereinheit(en) gedrückt wird und daß in der Rückflußleitung zum Zylinder (362, 462) eine verstellbare Drossel (368) angeordnet ist, wobei der Kolben (362, 462) der Hydraulik-Kolben-Zylindereinheit(en) der Einwärtsbewegung des Kolbens (211) der Pumpkammer mit einer einstellbaren Geschwindigkeit folgt.

13. Verbrennungsmotor nach einem der Ansprüche 7 bis 12, dadurch gekennzeichnet, daß ein oder mehrere weitere Hydraulikmotoren (276), welche parallel zum ersten Hydraulikmotor (274) liegen und vorzugsweise eine unterschiedliche Leistung zum ersten Hydraulikmotor aufweisen, in den Hydraulikkreis zuschaltbar sind.

14. Verbrennungsmotor nach einem der Ansprüche 6 bis 13, dadurch gekennzeichnet, daß der Kolben (211) der Pumpkammer (212) mit einer Speichereinrichtung, vorzugsweise einem Federspeicher (270), zur Speicherung der im Implosionstakt bei der Einwärtsbewegung des Kolbens (211) freigesetzten Energie und zur Freisetzung dieser Energie im folgenden Explosionstakt verbunden ist.

15. Verbrennungsmotor nach Anspruch 14, dadurch gekennzeichnet, daß die Speichereinrichtung zu Beginn des Explosionstaktes der Auswärtsbewegung des Kolbens (211) eine anfängliche Gegenkraft entgegengesetzt und nach Überwindung dieser anfänglichen Gegenkraft die Auswärtsbewegung des Kolbens (211) unterstützt.

16. Verbrennungsmotor nach Anspruch 6 und nach einem der Ansprüche 7 bis 15, dadurch gekennzeichnet, daß zum Einsprühen der Kühlfüssigkeit eine vom Hydraulikdruck der Hydraulikpumpeinrichtung im Explosionstakt betriebene Pumpeinrichtung (290) vorgesehen ist, welche Kühlfüssigkeit in einen Druckspeicher (291) pumpt, und daß am Ende des Expiosionstaktes ein vom Hydraulikdruck der Hydraulikpumpeinrichtung geschlossen gehaltenes selbstöffnendes Ventil (293) öffnet und die Verbindung der im Druckspeicher (291) unter Druck stehenden Kühlfüssigkeit zu den Sprühdüsen freigibt.

17. Verbrennungsmotor nach einem der Ansprüche 1 bis 16, dadurch gekennzeichnet, daß die Brennkammer zumindest ein selbstsperrendes Rückschlagventil (236) als Lufteinlaßventil aufweist.

18. Verbrennungsmotor nach einem der Ansprüche 1 bis 17, dadurch gekennzeichnet, daß zur Brennstoffzufuhr eine von einer Steuereinrichtung (203, 303) einstellbar getaktete Brennstoffzufuhreinrichtung vorgesehen ist, wobei im Anschluß an jeden Brennstoffzufuhr-Takt von der Steuereinrichtung (203, 303) ein Zündsignal zur Zündung des Gemisches in der Brennkammer (201) ausgegeben wird.

19. Verbrennungsmotor nach einem der Ansprüche 1 bis 6, dadurch gekennzeichnet, daß die mit der verschiebbaren Wandung in Verbindung stehende Antriebswelle (10) eine mit dem Kolben (11) über eine Kolbenstange (48) verbundene Kurbelwelle ist, wobei die Antriebswelle (10), vorzugsweise über eine Kupplung (171), mit einem mechanischen kraftschlüssigen Mehrganggetriebe (149) verbunden ist.

20. Verbrennungsmotor nach einem der Ansprüche 1 bis 6, dadurch gekennzeichnet, daß die Antriebswelle (10) mit einem stufenlosen, vorzugsweise hydraulischen, vorzugsweise hydrostatischen Getriebe (49) verbunden ist, dessen Übersetzungsverhältnis von einer Steuereinrichtung (3) steuerbar ist.

21. Verbrennungsmotor nach einem der Ansprüche 1 bis 20, dadurch gekennzeichnet, daß die Zuführleitungen (35, 36) bzw. -öffnungen (237, 302) für Frischluft und Kraftstoff bzw. für das Gemisch ausschließlich in die Brennkammer (1, 201) münden und das Gemisch in der Brennkammer vor der Zündung einen Druck im Bereich von 0,8 bis 2 bar, vorzugsweise etwa Atmosphärendruck aufweist.

22. Arbeitsverfahren eines Verbrennungsmotors, bei dem ein Brennstoff unter Bildung eines Verbrennungsgases in einem Explosionstakt verbrannt wird und die Expansion des Verbrennungsgases in mechanische Arbeit sowie die Bewegung einer Antriebswelle umgesetzt wird, dadurch gekennzeichnet, daß das Verbrennungsgas bis etwa Atmosphärendruck expandieren gelassen wird, wobei es von der Brennkammer (1, 201) mit starren Wandungen, in der es verbrannt wird, in eine gesonderte Pumpkammer (12, 212) geleitet wird, in der es unter Verschiebung einer starren beweglichen Wandung (11, 211) die mechanische Arbeit leistet.

23. Verfahren nach Anspruch 22, dadurch gekennzeichnet, daß das Volumen des in die Pumpkammer (12, 212) eingeströmten und auf etwa Atmosphärendruck expandierten heißen Verbrennungsgases in einem an den Explosionstakt umschließenden Implosionstakt durch Einsprühen eines Kühlmediums schlagartig verringert wird und der entstehende Unterdruck zumindest teilweise entweder sofort in mechanische Arbeit der Antriebswelle (10, 267, 268) umgesetzt wird oder in eine von einer Speichereinrichtung bis zum nächsten Explosionstakt gespeicherte Energie umgesetzt wird, die in der Folge der Antriebswelle zugeführt wird.

24. Verfahren nach Anspruch 22 oder Anspruch 23, dadurch gekennzeichnet, daß die Brennkammer (1, 201) für jeden Explosionstakt mit einer im wesentlichen gleichen Ladung an brennbarem Gemisch befüllt wird.
